(19) Europäisches Patentamt
European Patent Office
Office européen des brevets

(11) **EP 4 772 279 A1**

(12) **EUROPEAN PATENT APPLICATION**
published in accordance with Art. 153(4) EPC

(43) Date of publication:
**08.07.2026 Bulletin 2026/28**

(21) Application number: **24898242.3**

(22) Date of filing: **29.11.2024**

(51) International Patent Classification (IPC):
**B01J 37/02** (2006.01)    **B01J 37/08** (2006.01)
**B01J 37/00** (2006.01)

(52) Cooperative Patent Classification (CPC):
**B01J 37/00; B01J 37/02; B01J 37/08**

(86) International application number:
**PCT/KR2024/019382**

(87) International publication number:
**WO 2025/116650 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.12.2023 KR 20230172457**

(71) Applicant: **Korea Research Institute of Chemical Technology**
**Daejeon 34114 (KR)**

(72) Inventors:
• CHAE, Ho Jeong
  Daejeon 34114 (KR)
• KIM, Young Min
  Daejeon 34114 (KR)
• IM, Young Hwan
  Daejeon 34114 (KR)
• KIM, Geo Jong
  Daejeon 34114 (KR)

(74) Representative: **Isarpatent**
**Patent- und Rechtsanwälte Part G mbB**
**Friedrichstrasse 31**
**80801 München (DE)**

(54) **MOLDED CATALYST AND MANUFACTURING METHOD THEREFOR**

(57)    The present invention relates to a molded catalyst and a manufacturing method therefor and, more specifically, to a manufacturing method for a molded catalyst capable of sufficiently expressing coating strength, improving or maintaining catalytic activity even with a small amount of catalytically active metal, minimizing the use of a catalyst coating solution, and being reusable, thereby reducing the loss of the catalyst coating solution, and to a molded catalyst manufactured by the manufacturing method.

Fig. 1

## Description

## Technical Field

The present disclosure relates generally to a molded catalyst and a manufacturing method therefor. More particularly, the present disclosure relates to a manufacturing method for a molded catalyst which can exhibit excellent activity in various reactions, in which at least one metal oxide or metal is coated onto various types of molded bodies such as beads, pellets, and honeycombs. This enables sufficient coating strength to be achieved while improving or maintaining catalytic activity even with a small amount of catalytic active components, reduces the loss of coating solution during a coating process, and enables economical production of the molded catalyst without requiring a separate powder catalyst preparation process. The present disclosure also relates to a molded catalyst manufactured by the above manufacturing method.

## Background Art

Catalysts are materials that play a crucial role in industrial processes for the production of chemical substances, such catalysts are generally defined as substances that accelerate or decelerate the chemical transformation of other substances without being consumed. In particular, it is estimated that over 90% of all commercially produced chemicals use catalysts within their manufacturing process. Catalysts are widely used across various industrial sectors including petrochemicals, oil refining, automotive, environmental, energy, and gas, and their market size is steadily growing.

Commonly used catalysts consist mainly of a catalyst support and catalytically active metals supported on the surface of the catalyst support. Such catalysts are designed and optimized to provide appropriate selectivity and reactivity suitable for the intended reaction processes.

Catalysts of this type are typically prepared in powder form by combining a catalyst support and catalytically active metals through various methods such as impregnation, co-precipitation, ion-exchange, hydrothermal synthesis, and fusion. The prepared powder catalyst is subsequently mixed with various additives and extruded into different shapes through a multi-stage injection molding method. However the drawbacks of the injection molding process lie in that the manufacturing process is highly complicated, a large volume of powdered catalyst is required, and a significant amount of dust generated during the process makes production, installation, and maintenance operations difficult.

Recently, in order to reduce pressure drop within a catalyst layer and to increase the surface area of the catalyst, there has been proposed a technology in which catalyst-containing materials are applied onto the internal channel surfaces of ceramic or metallic molded bodies having a bead or honeycomb shape using methods including dip coating, wash coating, and spray coating. In such coated catalysts based on ceramic or metallic molded bodies, the adhesion between the catalyst layer and the molded body is critical. Key factors influencing this adhesion include surface treatment methods of the molded body, preparation methods of catalyst coating solution, coating techniques, and drying and calcination conditions.

Korean Patent No. 10-0807730 discloses a method for improving the adhesion between a molded body and a catalyst an interfacial adhesion layer on the surface of the molded body using atomic layer deposition (ALD) or chemical vapor deposition (CVD). In this approach, a material identical to the catalyst or having surface properties similar to those of the catalyst is deposited at the interface between the molded body and the catalyst. Korean Patent No. 10-1403698 discloses a method for manufacturing a metallic structured catalyst in which a metallic molded body is brought into contact with a mixed solution containing a precursor of a metal catalyst and a precipitant so that metal precipitates are formed on the surface of the metallic molded body, followed by heat treatment. Through this process, uniformly dispersed metal nanoparticles are supported on the surface of the metallic molded body, with enhanced bonding strength between the catalyst support layer and the surface of the metallic molded body.

Additionally, Korean Patent Application Publication No. 2023-0103587 provides a method in which a catalyst coating solution is deeply infiltrated into the surface of a molded body using an ultrasonic technique so that the catalyst coating solution can be uniformly distributed over the surface of the molded body. Subsequently, the catalyst coating solution is fixed onto the surface of the molded body at a constant and uniform thickness using an air knife combined with an infrared lamp.

However, the aforementioned conventional technologies suffer from the following problems. That is, they require expensive reaction equipment or vacuum environments, thereby limiting the ease of practical application and commercial feasibility of the technology. Additionally, it is difficult to uniformly disperse the catalyst coating solution over the surface of the molded body to obtain a uniform and consistent coating layer. Moreover, the adhesive strength between the catalyst coating layer and the molded body remains insufficient, and a significant loss of the catalyst coating solution may occur.

Due to these problems, when one or more metal oxides or metals are directly coated onto molded bodies such as beads, pellets, or honeycombs, a weak bond with the surface of the molded body may lead to coating failure, or even when a coating layer is successfully formed, it may easily detach from the molded body. As a result, the catalytic activity and physical durability of the catalyst may be deteriorated. This phenomenon tends to become more pronounced when using composite metal oxides or metals composed of two or more components chemically bonded to each other.

In order to overcome the above-described issues, the present disclosure provides a manufacturing method for a molded catalyst that can directly form one or more metal oxides or metals on a molded body without producing separate metal oxide or metal powder. The manufacturing method enables sufficient coating strength to be achieved while improving or maintaining catalytic activity even with a small amount of catalytically active component, and at the same time reduces the loss of catalyst coating solution, thereby increasing economic feasibility. The present disclosure also provides a molded catalyst manufactured by the manufacturing method.

[Documents of Related Art]

[Patent Documents]

(Patent Document 1) Korean Patent No. 10-0807730 (Publication Date: 2007.10.01.)
(Patent Document 2) Korean Patent No. 10-1403698 (Publication Date: 2013.02.07.)
(Patent Document 3) Korean Patent Application Publication No. 2023-0103587 (Publication Date: 2023.07.07.)

**Disclosure**

**Technical Problem**

Accordingly, the present disclosure has been made keeping in mind the above problems occurring in the related art, and one objective of the present disclosure is to provide a manufacturing method for a molded catalyst capable of achieving sufficient coating strength while improving or maintaining catalytic activity even with a small amount of catalytic active metal, and at the same time minimizing the usage of catalyst coating solution and reducing the loss thereof. The present disclosure also provides a molded catalyst manufactured by the above manufacturing method.

**Technical Solution**

In order to accomplish the above objective, the present disclosure provides a manufacturing method for a molded catalyst, the manufacturing method including: (a) immersing a molded body in a coating solution including a catalytic component to form a wet layer containing the catalytic component on a surface of the molded body; (b) immersing the molded body on which the wet layer has been formed in a fixation solution in which at least one compound selected from the group consisting of LiOH, NaOH, KOH, NH$_4$OH, and (NH$_2$)$_2$CO is dissolved, thereby fixing the wet layer onto the surface of the molded body; and (c) subjecting the molded body on which the wet layer has been fixed to heat treatment, thereby forming a coating layer of the catalytic component on the surface of the molded body.

In a preferred embodiment of the present disclosure, the molded body in step (a) may be surface-treated with an acid and/or a base. The acid may be at least one selected from the group consisting of HCl, HNO$_3$, H$_2$SO$_4$, HF, H$_3$PO$_4$, and organic acid, and the base may be at least one selected from the group consisting of basic substance such as LiOH, NaOH, KOH, NH$_4$OH, and NaBH$_4$.

In a preferred embodiment of the present disclosure, the coating solution in step (a) may further include: at least one first additive selected from the group consisting of methyl cellulose, hydroxyethyl cellulose, sodium carboxymethyl cellulose, purified starch, dextrin, polyvinyl alcohol, polyvinyl butyral, polymethyl methacrylate, and polyethylene glycol; and/or at least one second additive selected from polyhydric alcohols.

In a preferred embodiment of the present disclosure, the first additive may be contained in an amount of 0.05 to 10 parts by weight based on 100 parts by weight of a catalyst support component, and the second additive may be contained in an amount of 0.5 to 90 parts by volume based on 100 parts by volume of the catalyst support component.

In a preferred embodiment of the present disclosure, the manufacturing method may further include: performing an air-blowing process for removing excess coating solution after the immersing of the coating solution in step (a).

In a preferred embodiment of the present disclosure, a solvent of the coating solution in step (a) and a solvent of the fixing solution in step (b) may each independently be at least one selected from the group consisting of water, methanol, ethanol, isopropanol, and glycol.

In a preferred embodiment of the present disclosure, the fixation solution in step (b) may be maintained at a temperature of 20°C to 50°C, and the heat treatment in step (c) may include a drying step at a temperature of 40°C to 120°C and a calcination step at a temperature of 350°C to 700°C.

In a preferred embodiment of the present disclosure, the manufacturing method may further include: (d) supporting a catalytically active material on the coating layer of the molded body; and (e) subjecting the molded body on which the catalytically active material has been supported to drying and/or calcination, thereby preparing a catalytically active material-supported molded body.

Additionally, the present disclosure provides a molded catalyst having a coating layer of a catalytic component formed on a surface of a molded body, the molded catalyst being manufactured by a manufacturing method including: (a) immersing a molded body in a coating solution including a catalytic component to form a wet layer containing the catalytic component on a surface of the molded body; (b) immersing the molded body on which the wet layer has been formed in a fixation solution in which at least one compound selected from the group consisting of LiOH, NaOH, KOH, $NH_4OH$, and $(NH_2)_2CO$ is dissolved, thereby fixing the wet layer onto the surface of the molded body; and (c) subjecting the molded body on which the wet layer has been formed to heat treatment, thereby forming a coating layer of the catalytic component on the surface of the molded body.

In a preferred embodiment of the present disclosure, the molded catalyst may be manufactured by the manufacturing method further including: (d) supporting a catalytically active material on the coating layer of the molded body; and (e) subjecting the molded body on which the catalytically active material has been supported to drying and/or calcination, thereby preparing a catalytically active material-supported molded body.

### Advantageous Effects

According to the present disclosure, a molded catalyst can be manufactured by coating catalytic components directly onto the surface of a pre-formed molded body without preparing a powder catalyst. Through this approach, the adhesion between the molded body and a support coating layer can be improved, thereby enabling the final molded catalyst to exhibit sufficient mechanical strength.

Additionally, when a first additive and/or a second additive proposed in the present disclosure is used, the usage of coating solution can be minimized, and the coating solution and/or fixation solution remaining after catalyst coating can be reused. Accordingly, unnecessary material loss during the manufacturing process of the molded catalyst can be reduced. Furthermore, even with a small amount of expensive catalytic active components and coating layer materials, catalytic activity can be significantly improved, thereby enabling economical mass production of the molded catalyst.

### Description of Drawings

FIG. 1 is a flowchart schematically illustrating a manufacturing method for a molded catalyst according to an embodiment of the present disclosure.

FIG. 2 illustrates images showing the state of beads after sintering in Example 13 of the present disclosure and Comparative Example 5.

FIG. 3 illustrates images showing the state of beads after sintering in Example 14 of the present disclosure and Comparative Example 6.

[Description of the Reference Numerals]

100: molded body
200: coating solution
300: wet layer
400: fixation solution
500: catalytic component coating layer
1000: molded catalyst

### Mode for Invention

Unless otherwise defined, all terms including technical and scientific terms used herein have the same meaning as commonly understood by one of ordinary skill in the art to which this disclosure belongs. Generally, the nomenclature used herein is well known in the art and is the nomenclature normally used.

It will be further understood that the terms "comprise", "include", "have", etc. when used in this specification, specify the presence of stated features, integers, steps, operations, elements, components, and/or combinations thereof but do not preclude the presence or addition of one or more other features, integers, steps, operations, elements, components, and/or combinations thereof.

Unless otherwise specified, the reactions and mixing processes described hereinafter may be carried out at room temperature and atmospheric pressure, and may be performed under conventional reaction and mixing conditions without additional modifications. However, the present disclosure should not be interpreted in a manner that departs from what would be clearly understood by those skilled in the art.

The present disclosure relates to a manufacturing method for a molded catalyst, the manufacturing method including: (a) immersing a molded body in a coating solution containing a catalytic component to form a wet layer composed of the catalytic component on the surface of the molded body; (b) immersing the molded body on which the wet layer has been formed in a fixation solution, thereby fixing the wet layer onto the surface of the molded body; and (c) subjecting the molded body on which the wet layer has been fixed to heat treatment, thereby forming a coating layer of the catalytic component on the surface of the molded body. The present disclosure also relates to a molded catalyst manufactured by the manufacturing method.

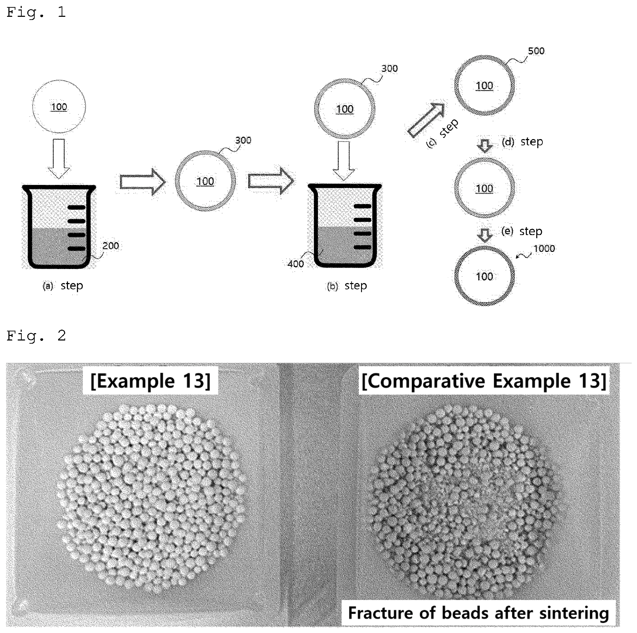

Hereinafter, a manufacturing method for a molded catalyst according to the present disclosure and a molded catalyst manufactured thereby will be described in detail with reference to the accompanying drawings. FIG. 1 is a flowchart schematically illustrating a manufacturing method for a molded catalyst according to an embodiment of the present disclosure.

Referring to FIG. 1, in the manufacturing method for the molded catalyst according to the present disclosure, a molded body 100 is first immersed in a coating solution 200 including a catalytic component so that a wet layer 300 composed of the catalytic component is formed on the surface of the molded body [step (a)].

The coating solution 200 contains a catalytic component, and the catalytic component included in the coating solution may be at least one selected from a catalytically active material that promotes a reaction, a precursor of the catalytically active material, a support material capable of supporting the catalytically active material, or a precursor of the support material. For example, the catalytic component may be a salt compound or a complex containing a metal element. More specifically, the catalytic component may be at least one selected from metal nitrates, sulfates, phosphates, halide salts, alkoxide salts, oxynitrates, hydroxides, acetates, alkyl salts, and hydrates thereof. The amount of the catalytic component in the entire coating solution may be 1 to 100 mmol mL$^{-1}$, preferably 5 to 10 mmol mL$^{-1}$.

In the coating solution, the catalytic component may be present in a dissolved or dispersed state in a solvent. The solvent may be used without limitation as long as it is a solvent capable of dissolving or dispersing the catalytic component. Examples thereof include water such as distilled water and purified water; alcohols such as methanol, ethanol, and isopropanol; and glycols. Among these, preferred is water.

The wet layer is formed via a dip coating method in which the molded body is immersed in the coating solution, allowing the coating solution to infiltrate into the molded body. In this process, dip coating is performed by dipping the molded body into the coating solution to form the wet layer 300 containing components of the coating solution on the surface of the molded body. The coating temperature and coating time may be controlled depending on the type, concentration, and amount of the coating solution and the molded body. For example, the temperature of the coating solution during dipping (immersion) may be 20°C to 40°C, and the coating time may be 0.5 to 4 hours. Additionally, the coating process may be repeated multiple times so that the coating layer having a desired thickness and strong adhesion is formed on the surface of the molded body.

If necessary, the coating solution may further include a first additive that binds the catalytic component to the surface of the molded body and imparts aggregation and viscosity. The first additive prevents the catalytic component contained in the wet layer formed on the surface of the molded body from being leached into the fixation solution during a fixation step which will be described later. The first additive is not particularly limited as long as it is an organic additive capable of improving the adhesion of the catalytic component to the surface of the molded body and preventing leaching of the catalytic component contained in the wet layer into the fixing reaction solution during the fixation step. Examples of the first additive include methyl cellulose, hydroxyethyl cellulose, sodium carboxymethyl cellulose, purified starch, dextrin, polyvinyl alcohol, polyvinyl butyral, polymethyl methacrylate, and polyethylene glycol. From the viewpoint of forming a uniform wet layer, preferred are methyl cellulose, polyvinyl alcohol, and polyethylene glycol, and more preferred are methyl cellulose and polyvinyl alcohol.

Due to the addition of the first additive, when performing the fixation step in which the molded body on which the wet layer has been formed is immersed in the fixation solution, the catalytic component contained in the wet layer may be prevented from being leached into the fixation solution. Accordingly, the loss of the catalytic component may be prevented, and contamination of the fixation solution may also be avoided. As a result, the manufacturing method for the molded catalyst becomes more economical and simpler.

The first additive may be contained in the coating solution in an amount of 0.05 to 10 parts by weight, preferably 1 to 3 parts by weight, based on 100 parts by weight of a catalyst support component. When the amount of the first additive is less than 0.05 parts by weight based on 100 parts by weight of the catalyst support component, the function of the first additive may not be sufficiently exhibited. On the other hand, when the amount exceeds 10 parts by weight, the excessive additive may reduce the content of the catalytic component and may cause problems during the fixation step.

Meanwhile, the coating solution may further include at least one second additive selected from polyhydric alcohols such as glycerol, ethylene glycol, and propylene glycol, or waxes and lubricants, in order to suppress shrinkage or delamination of the coating layer that may occur during a drying process which will be described later. The second additive may be contained in an amount of 0.5 to 90 parts by volume based on 100 parts by volume of the catalyst support component. Within the above content range, the additive functions to form a uniform coating layer without deteriorating the catalyst properties.

The molded body onto which the coating solution is applied may have various shapes depending on the type of reaction to which the molded catalyst is applied. Specifically, the molded body may have a shape selected from beads, pellets, felts, mats, meshes, foams, foils, honeycombs, and fins. The material of the molded body may also be selected depending on the reaction type, and may be a metal or ceramic material. More specifically, the molded body material may include at least one metal oxide such as alumina, silica, zirconia, ceria, silicon carbide, or cordierite, may be a ceramic material or various metallic materials.

In one embodiment, when the molded catalyst according to the present disclosure is applied to an ammonia decomposition reaction, the material of the molded body is preferably alumina or silica in view of reaction efficiency, and the shape thereof is preferably a bead shape or a honeycomb shape.

Additionally, the molded body may undergo a chemical surface treatment using a surface treatment agent such as an acid and/or a base in order to form polar functional groups such as hydroxyl groups and to create an unstable surface state. This surface modification facilitates uniform dispersion of the catalyst support component on the surface of the molded body. In this case, the acid used for e surface treatment of the molded body may include at least one selected from the group consisting of HCl, $HNO_3$, $H_2SO_4$, HF, $H_3PO_4$, and organic acid. The organic acid is not particularly limited, and examples thereof include acetic acid, formic acid, lactic acid, citric acid, acrylic acid, sulfonic acid, and carboxylic acid. The base may be at least one selected from the group consisting of base solutions containing LiOH, NaOH, KOH, $NH_4OH$, and $NaBH_4$, and is preferably KOH or $NH_4OH$.

In the present disclosure, by applying the dip coating method to form a coating layer on the surface of the molded body, even a molded body having a complex structure may be provided with a uniform and thin coating layer on the surface thereof, and the coating amount may be easily controlled. Additionally, through the use of the first additive and/or the second additive, loss of the coating solution may be minimized while enabling continuous reuse of the coating solution, thereby making economical mass production of the molded catalyst possible.

Furthermore, in the present disclosure, after immersion of the molded body in the coating solution, excess coating solution remaining in the wet layer on the surface of the molded body may be removed so as to improve the strength of the coating layer while securing an appropriate thickness of the coating layer. In this case, the intensity and duration of an air blow for removing the excess coating solution may be controlled, or the viscosity of the coating solution may be controlled according to the content of the additives.

Subsequently, the molded body 100 on which the wet layer 300 has been formed by the dip coating process is immersed in a fixation solution 400 to perform fixation of the wet layer [step (b)].

In step (b), the wet layer formed on the surface of the molded body in step (a) is fixed using the fixation solution 400, thereby enabling the catalytic component contained in the wet layer 300 to be strongly bound to the surface of the molded body.

In this case, the fixation may be carried out by immersing the molded body on which the wet layer has been formed in the fixation solution at a temperature of 20°C to 60°C for 30 minutes to 4 hours, preferably 1 to 3 hours. When the fixation is performed within the above temperature and time ranges, a coating layer having uniformity and strong adhesion may be obtained. Additionally, problems such as insufficient formation of the coating layer due to excessive exposure of the wet layer to the reaction solution and leaching of components contained in the wet layer, as well as contamination of the reaction solution that makes reuse difficult, may be prevented.

The fixation solution 400 is not particularly limited as long as it is a solution in which a compound that enables the wet layer of the catalytic component contained in the coating solution to be fixed onto the surface of the molded body is dissolved in a solvent. Specifically, the fixation solution may be a solution containing one selected from the group consisting of LiOH, NaOH, KOH, $NH_4OH$, and $(NH_2)_2CO$ (urea). From the viewpoint of ease of fixation and cost efficiency, preferred is NaOH or KOH.

The solvent of the fixation solution is not particularly limited as long as it is a solvent capable of dissolving the compounds such as LiOH, NaOH, KOH, $NH_4OH$, and $(NH_2)_2CO$. Examples thereof include water such as distilled water and purified water; alcohols such as methanol, ethanol, and isopropanol; and glycols. Among these, preferred is water. The concentration of the compounds such as LiOH, NaOH, KOH, $NH_4OH$, and $(NH_2)_2CO$ in the fixation solution may be 0.5 to 4 mol $L^{-1}$, preferably 0.75 mol to 1.25 mol $L^{-1}$.

Subsequently, the molded body on which the wet layer has been fixed is subjected to heat treatment to form a catalytic component coating layer 500 on the surface of the molded body 100 [step (c)].

In step (b), the molded body on which the wet layer has been fixed by immersion in the fixation solution is separated from the fixation solution, and in step (c), the fixed wet layer is subjected to heat treatment. The heat treatment may further include, in detail, a drying step. That is, through the drying step, the solvent present in the fixation solution may be completely removed. The drying may be performed, for example, at 40°C to 120°C for a predetermined period of time, specifically for 4 to 48 hours, using a conventional method such as hot-air drying or constant-temperature constant-humidity drying. When the drying temperature falls within the above range, sufficient drying of the fixed wet layer may be achieved, while preventing excessive drying or delamination of the dried wet layer due to abrupt reactions of components contained in the wet layer.

Thereafter, the heat treatment of the molded body may be variously modified in consideration of the glass transition temperature specific to the molded body or the catalyst support component. However, in order to obtain a molded body in which a support coating layer is formed without cracks, the heat treatment is preferably performed by calcination at 350°C to 700°C for a predetermined time period in an oxidizing atmosphere. The heat treatment time may vary depending on conditions such as the calcination temperature, coating amount, and the size and quantity of the molded body, but may be, for example, 2 to 6 hours.

When the heat treatment temperature falls below 350°C, removal of additives contained in the dried wet layer may not be sufficiently achieved due to a low sintering temperature. On the other hand, when the temperature exceeds 700°C, excessive deformation of the coating layer and the molded body may occur due to an excessively high sintering temperature. Additionally, during the heat treatment process, a rapid temperature change may cause abrupt combustion and oxidation reactions of the additives, thereby generating cracks and delamination in the coating layer and significantly deteriorating the strength of the coating layer. Therefore, it is preferable that the temperature is gradually increased at a rate of equal to or less than 5°C per minute.

When the formed coating layer is composed of a catalytically active material, the molded body may be directly applied as a molded catalyst, thereby exhibiting the effects of high mechanical strength and reduced catalyst manufacturing cost presented by the present disclosure. On the other hand, when the coating layer is composed of a support material rather than a catalytically active material, step (d) of supporting a catalytically active material on the coating layer of the molded body may be further included.

In step (d), the supporting of the catalytically active material is not particularly limited as long as it is a method capable of supporting the catalytically active material on the molded body on which the coating layer 500 has been formed. Specifically, the method may include a hydrothermal synthesis method, a co-precipitation method, an impregnation method, a mechanical mixing method, or a deposition method, and is preferably an impregnation method.

In one embodiment, among the supporting methods, the impregnation may be performed by dissolving a catalytically active material or a precursor thereof in a solvent, and then uniformly distributing the resulting solution over the support coating layer, followed by evaporation of the solvent. In this case, the solvent is not particularly limited as long as it can uniformly disperse the precursor of the catalytically active material. Examples thereof include water, methanol, ethanol, propanol, butanol, and acetone. The amount of the solvent is not particularly limited as long as it allows uniform dispersion of the catalytically active material.

At this time, as the catalytically active material, a compound or mixture containing various metal elements may be used depending on the type of reaction to which the molded catalyst 1000 is applied. Examples thereof include transition metal elements such as platinum, palladium, ruthenium, cobalt, nickel, copper, zinc, and tungsten, as well as alkali metals and alkaline earth metals such as lithium, rubidium, magnesium, and calcium.

The amount of the supported catalytically active material may vary depending on the reaction type, but may be 0.1 to 40 wt.%, preferably equal to or less than 10 wt.%, based on the total weight of the molded body.

Subsequently, if necessary, step (e) of subjecting the molded body on which the catalytically active material has been supported to drying and/or calcination, thereby preparing a catalytically active material-supported molded body.

The drying in step (e) may be performed at 50°C to 120°C for a predetermined period of time, for example 2 to 48 hours, using a conventional method such as an oven, hot-air drying, or constant-temperature constant-humidity drying.

Although it may vary depending on circumstances, when the drying temperature falls below 50°C, the solvent used in the supporting process may not be sufficiently removed due to the low drying temperature. On the other hand, when it exceeds 120°C, rapid volatilization of the solvent may cause collapse of the coating layer. Therefore, it is preferable to maintain the drying temperature within the above range.

The dried molded body may be further subjected to calcination. The calcination may be variously modified in consideration of the sintering temperature specific to the type of the molded body. However, in order to obtain a molded catalyst 1000 without cracks, the calcination is preferably performed at 300°C to 500°C for a predetermined period of time in an oxidizing atmosphere. The calcination time may vary depending on conditions such as the calcination temperature, loading amount, and the size and quantity of the molded body, but may be, for example, 1 to 4 hours.

The above calcination temperature range is preferred in order to avoid problems in which catalytically active components and activity-promoting components are not sufficiently stabilized due to a low sintering temperature, or in which dispersion of catalytically active components and activity-promoting components is deteriorated and deformation of the molded body occurs due to an excessively high sintering temperature. Additionally, during the calcination process, a rapid temperature change may cause cracks and pores in the molded body and in the coating layer formed on the surface thereof, thereby significantly reducing the strength of the coating layer. Therefore, it is preferable that the temperature is gradually increased at a rate of equal to or less than 10°C per minute.

Additionally, the present disclosure provides a molded catalyst having a coating layer of a catalytic component formed on the surface of a molded body, the molded catalyst being manufactured by a manufacturing method including: (a) immersing a molded body in a coating solution including a catalytic component to form a wet layer containing the catalytic component on the surface of the molded body; (b) immersing the molded body on which the wet layer has been formed in a fixation solution in which at least one compound selected from the group consisting of LiOH, NaOH, KOH, $NH_4OH$, and $(NH_2)_2CO$ is dissolved, thereby fixing the wet layer onto the surface of the molded body; and (c) subjecting the molded body on which the wet layer has been fixed to heat treatment, thereby forming a coating layer of the catalytic component on the surface of the molded body.

The catalytic component may be at least one selected from a catalytically active material, a precursor of the catalytically active material, a support material capable of supporting the catalytically active material, or a precursor of the support material. As described above, the molded catalyst according to the present disclosure may be manufactured by the manufacturing method further including: (d) supporting a catalytically active material on the coating layer of the molded body; and (e) subjecting the molded body on which the catalytically active material has been supported to drying and/or calcination, thereby preparing a catalytically active material-supported molded body. Other detailed descriptions of the manufacturing method remain the same as those described above, and thus repeated descriptions thereof are omitted.

The molded catalyst 1000 manufactured by the manufacturing method according to the present disclosure exhibits improved adhesion between the molded body and the coating layer, thereby achieving sufficient coating strength. Additionally, by using the first additive and/or the second additive, loss of the catalyst coating solution may be reduced while improving the uniformity of the coating layer. Furthermore, when the coating layer of the molded catalyst 1000 manufactured according to the present disclosure is composed of a support material, catalytic activity may be significantly enhanced even with a relatively small amount of catalytically active material by supporting the catalytically active material on the formed coating layer.

Hereinafter, the present disclosure will be described in more detail with reference to preferred examples to aid understanding. However, the following examples are merely illustrative of the present disclosure, and the scope of the present disclosure is not limited thereto.

### <Example 1>

A solution was prepared by dissolving 4 mmol (1.7544 g) of $Ce(NO_3)_3 \cdot 6H_2O$ (Sigma, 99%) and 2 mmol (0.8661 g) of $La(NO_3)_3 \cdot 6H_2O$ (Sigma, 99%) as catalytic components in 10 mL of deionized water. Separately, a solution was prepared by dissolving 1 g of methyl cellulose as a first additive in 10 mL of deionized water and 30 mL of ethanol (99.9%), and 11 mL of the solution was taken and added to the above catalytic component solution. Thereafter, 5 mL of glycerol was additionally mixed to prepare a coating solution.

Subsequently, 15 g of alumina beads (average diameter: 3 mm) were dip-coated in the prepared coating solution at room temperature for 60 minutes. The coated beads were then immersed in 20 mL of a 1 M KOH fixation solution at room temperature for 30 to 120 minutes so as to undergo fixation. After completion of fixation, the fixed alumina beads were dried in an oven at 60°C for 24 hours, followed by heat treatment at 600°C (heating rate: 5°C/min) for 6 hours. Thereafter, 12 g of the heat-treated alumina beads were suspended in a solution prepared by diluting 15.2586 mL of 1.5 wt.% ruthenium nitrosyl nitrate solution with 50 mL of deionized water, followed by solvent evaporation at 80 °C under 400 mbar. The resulting material was dried in an oven at 100°C for 24 hours, and subsequently calcined at 350°C (heating rate: 10°C/min) for 2 hours. Thus, a $Ru/La-Ce/Al_2O_3$ molded catalyst was obtained.

### <Examples 2 to 3>

Molded catalysts were manufactured in the same manner as in Example 1, except that, as per the conditions in Table 1, instead of alumina beads, $SiO_2$ gel beads (average diameter: 1.8 mm) or $ZrO_2$ pellets (diameter: 3 mm × height: 5 mm, cylindrical) surface-treated by immersion in 1 M KOH for 1 hour prior to immersion in the coating solution were used, and the fixation time in the 1 M KOH fixation solution was changed to 2 hours. Thus, $Ru/La-Ce/ZrO_2$ and $Ru/La-Ce/SiO_2$ molded catalysts were obtained.

### <Examples 4 to 6>

Molded catalysts were manufactured in the same manner as in Example 1, except that LiOH, NaOH, and $NH_4OH$ were respectively used as the fixation solution instead of KOH.

### <Examples 7 to 9>

Molded catalysts were manufactured in the same manner as in Example 1, except that, as the first additive, polyvinyl alcohol (Sigma Aldrich, average molecular weight: 89,000 to 98,000), polyethylene glycol (Sigma Aldrich, average molecular weight: 400), or silica sol (Sigma Aldrich, model: Ludox®-AS40) was used instead of methyl cellulose.

### <Examples 10 to 12>

Molded catalysts were manufactured in the same manner as in Example 1, except that the catalytic components were varied.

For preparation of the coating solution corresponding to each example, 6 mmol of $Mg(NO_3)_2 \cdot 6H_2O$, 6 mmol of $Y(NO_3)_3 \cdot 6H_2O$, and 6 mmol of $Pr(NO_3)_3 \cdot 6H_2O$ were added to 10 mL of deionized water to prepare a solution containing the catalytic components. Separately, 1 g of methyl cellulose was dissolved in 10 mL of deionized water and 30 mL of ethanol (99.9%), and 11 mL of the resulting solution was taken and added to the above catalytic component solution, followed by addition of 5 mL of glycerol to prepare each coating solution.

### <Example 13>

A molded catalyst was manufactured in the same manner as in Example 1, except that the concentration of the catalytic components was increased to four times that of the catalytic components used in Example 1.

### <Example 14>

A molded catalyst was manufactured in the same manner as in Example 13, except that only $Ce(NO_3)_3 \cdot 6H_2O$ was used as the catalytic component without using $La(NO_3)_3 \cdot 6H_2O$, and the molar amount of $Ce(NO_3)_3 \cdot 6H_2O$ was adjusted to be equal to the total molar amount of $Ce(NO_3)_3 \cdot 6H_2O$ and $La(NO_3)_3 \cdot 6H_2O$ used in Example 13.

### <Example 15>

A molded catalyst was prepared in the same manner as in Example 1, except that, as per the conditions in Table 1, the molded body was pre-treated by immersion in a 1 M KOH solution for 1 hour.

### <Example 16>

A molded catalyst was manufactured in the same manner as in Example 1, except that the first additive, methyl cellulose, was not added in the preparation of the coating solution in Example 1.

### <Example 17>

A molded catalyst was manufactured in the same manner as in Example 1, except that the second additive was not used in the preparation of the coating solution in Example 1.

### <Example 18>

A molded catalyst was manufactured in the same manner as in Example 1, except that ethylene glycol (Sigma Aldrich) was used as the second additive instead of glycerol in the preparation of the coating solution in Example 1.

### <Comparative Examples 1 to 3>

Each molded body, including alumina beads (average diameter: 3 mm), $SiO_2$ gel beads (average diameter: 1.8 mm), and $ZrO_2$ pellets (diameter: 3 mm × height: 5 mm, cylindrical), each weighing 15 g, was surface-treated by immersion in 20 mL of a 1 M KOH solution as a surface treatment agent at room temperature for 60 minutes. Separately, a uniform paste was prepared by mixing 3 g of La-CeO$_x$ powder, 0.3 g of glycerol, 0.3 g of polyvinyl butyral, and 1 to 3 mL of 1-butanol, followed by stirring for 10 minutes using a stirrer. Thereafter, 15 g of each of the surface-treated molded bodies was added to the prepared paste, and the mixture was subjected to planetary milling at 500 rpm for 10 minutes, thereby coating the paste onto the surface of the molded body.

The powder-coated molded body was dried in an oven for 24 hours, followed by heat treatment at 600°C (heating rate: 5°C/min) for 6 hours. Thereafter, the heat-treated alumina beads were suspended in a solution prepared by diluting 15.2586 mL of 1.5 wt.% ruthenium nitrosyl nitrate solution with 50 mL of deionized water, followed by solvent evaporation at 80°C under 400 mbar. The resulting material was dried in an oven at 100°C for 24 hours, and subsequently calcined at 350°C (heating rate: 10°C/min) for 2 hours. Thus, $Ru/La\text{-}Ce/Al_2O_3$-powder, $Ru/La\text{-}Ce/SiO_2$-powder, and $Ru/La\text{-}Ce/ZrO_2$-powder molded catalysts were respectively obtained.

**<Comparative Example 4>**

A molded catalyst was manufactured in the same manner as in Example 1, except that, as per the conditions in Table 1, the fixation step was carried out using 20 mL of deionized water instead of the fixation solution.

**<Comparative Examples 5 and 6>**

Comparative Examples 5 and 6 were manufactured in the same manner as in Examples 13 and 14, respectively, except that the fixation step was omitted.

**<Comparative Example 7>**

A solution was prepared by dissolving 3.202 g of $La(NO_3)_3 \cdot 6H_2O$ and 6.4865 g of $Ce(NO_3)_3 \cdot 6H_2O$ in 100 mL of deionized water, followed by suspending 15 g of alumina beads (average diameter: 3 mm) therein. The solvent was evaporated at 80°C under 400 mbar. The resulting molded body on which the catalytic components have been supported was dried in an oven at 100°C for 24 hours, followed by heat treatment at 500°C for 3 hours. Thereafter, 12 g of the heat-treated alumina beads were suspended in a solution prepared by diluting 15.2586 mL of 1.5 wt.% ruthenium nitrosyl nitrate solution with 50 mL of deionized water, followed by solvent evaporation at 80°C under 400 mbar. The resulting material was dried in an oven at 100°C for 24 hours, and subsequently calcined at 350°C (heating rate: 10°C/min) for 2 hours. Thus, a $Ru/La\text{-}Ce/Al_2O_3$ molded catalyst was obtained.

[Table 1]

| Classification | Molded body type | Catalytic component a) | Surface treatment agent for molded body | First additive | Second additive | Fixation solution |
|---|---|---|---|---|---|---|
| Example 1 | $Al_2O_3$ beads | La-Ce | - | Methyl cellulose | Glycerol | KOH |
| Example 2 | $ZrO_2$ pel-lets | La-Ce | KOH | Methyl cellulose | Glycerol | KOH |
| Example 3 | $SiO_2$ gel beads | La-Ce | KOH | Methyl cellulose | Glycerol | KOH |
| Example 4 | $Al_2O_3$ beads | La-Ce | - | Methyl cellulose | Glycerol | LiOH |
| Example 5 | $Al_2O_3$ beads | La-Ce | - | Methyl cellulose | Glycerol | NaOH |
| Example 6 | $Al_2O_3$ beads | La-Ce | - | Methyl cellu-lose | Glycerol | $NH_4OH$ |
| Example 7 | $Al_2O_3$ beads | La-Ce | - | Polyvinyl alcohol | Glycerol | KOH |
| Example 8 | $Al_2O_3$ beads | La-Ce | - | Polyethylene glycol | Glycerol | KOH |
| Example 9 | $Al_2O_3$ beads | La-Ce | - | Silica sol | Glycerol | KOH |
| Example 10 | $Al_2O_3$ beads | Mg | - | Methyl cellu-lose | Glycerol | KOH |
| Example 11 | $Al_2O_3$ beads | Y | - | Methyl cellu-lose | Glycerol | KOH |

(continued)

| Classification | Molded body type | Catalytic component a) | Surface treatment agent for molded body | First additive | Second additive | Fixation solution |
|---|---|---|---|---|---|---|
| Example 12 | $Al_2O_3$ beads | Pr | - | Methyl cellulose | Glycerol | KOH |
| Example 13 | $Al_2O_3$ beads | La-Ce | - | Methyl cellulose | Glycerol | KOH |
| Example 14 | $Al_2O_3$ beads | Ce | - | Methyl cellulose | Glycerol | KOH |
| Example 15 | $Al_2O_3$ beads | La-Ce | KOH | Methyl cellulose | Glycerol | KOH |
| Example 16 | $Al_2O_3$ beads | La-Ce | - | - | Glycerol | KOH |
| Example 17 | $Al_2O_3$ beads | La-Ce | - | Methyl cellulose | - | KOH |
| Example 18 | $Al_2O_3$ beads | La-Ce | - | Methyl cellulose | Ethylene glycol | KOH |
| Comparative Example 1 | $Al_2O_3$ beads | La-Ce | KOH | Polyvinyl butyral | Glycerol | - |
| Comparative Example 2 | $ZrO_2$ pellets | La-Ce | KOH | Polyvinyl butyral | Glycerol | - |
| Comparative Example 3 | $SiO_2$ gel beads | La-Ce | KOH | Polyvinyl butyral | Glycerol | - |
| Comparative Example 4 | $Al_2O_3$ beads | La-Ce | - | Methyl cellulose | Glycerol | $H_2O$ |
| Comparative Example 5 | $Al_2O_3$ beads | La-Ce | - | Methyl cellulose | Glycerol | - |
| Comparative Example 6 | $Al_2O_3$ beads | Ce | - | Methyl cellulose | Glycerol | - |
| Comparative Example 7 | $Al_2O_3$ beads | La-Ce | - | - | - | - |
| a) For catalytic components, only metal elements derived from metal precursor compounds are listed. | | | | | | |

**<Experimental Example 1: Analysis of Mechanical Properties and Composition of Molded Catalysts>**

In order to evaluate the mechanical strength of the molded catalysts, the maximum stress measured when a vertical load was applied to each molded catalyst was determined using an impact resistance measuring apparatus, and the measurement was repeated at least 10 times. The compressive strength was calculated assuming that the cross-section of the molded catalyst was circular with a radius corresponding to that of the catalyst, and the average value was used as a representative value. The calculation equation used is as follows:

$$Compressive\ strength(^N/_{cm^2}) = \frac{Measured\ maximum\ stress}{Measured\ cross-sectional\ area\ of\ molded\ catalyst}$$

*For a catalyst having a diameter of 3 mm, when the measured maximum stress is 10 N :*

$$= \frac{10\ N}{(0.15\ cm)^2 \times \pi} \approx 141.5\ Ncm^{-2}$$

In order to evaluate the detachment of the coating layer, a ceramic container was filled with a predetermined amount of the molded catalyst (prior to Ru loading) to approximately 70% of the container cross-sectional area. The container was then shaken using a shaker at 250 rpm for 1 to 3 hours, during which the molded catalysts were allowed to collide vigorously with each other inside the container. After completion of shaking, powders detached from the molded catalyst were removed by sieving, and the weight of the remaining molded catalyst was measured. The detachment rate of the coating layer was calculated on the basis of the difference between the initial weight of the molded catalyst and the weight after shaking, according to the following equation:

$$Detachment\ rate\ (\%) =$$

$$\frac{-(Initial\ weight\ of\ molded\ catalyst - Weight\ of\ molded\ catalyst\ after\ testing)}{Initial\ weight\ of\ molded\ catalyst} \times 100$$

In order to analyze the composition of the manufactured bead catalyst, the catalyst prior to Ru loading was uniformly and finely ground into powder, and qualitative and quantitative analyses were performed using X-ray fluorescence (XRF).

**<Experimental Example 2: Evaluation of Catalytic Performance for Ammonia Decomposition>**

Ammonia decomposition reactions were carried out using each of the molded catalysts manufactured in the Examples and Comparative Examples, and the ammonia conversion rate was measured. The measurement was conducted under atmospheric pressure at an ammonia space velocity of 3,000 mL/$g_{cat}$/h, and at reaction temperatures of 350°C, 400°C, 450°C, 500°C, and 550°C. The gaseous products generated after the ammonia decomposition reaction, including hydrogen, nitrogen, and unreacted ammonia, were analyzed using gas chromatography (GC). The ammonia conversion rate was calculated according to the following equation:

$$Ammonia\ conversion\ rate(\%) =$$

$$\frac{Flow\ rate\ of\ ammonia\ introduced - Flow\ rate\ of\ ammonia\ discharged}{Flow\ rate\ of\ ammonia\ introduced} \times 100$$

**<Detachment rate of Molded Catalysts>**

In order to confirm the coating layer fixation effect of the manufacturing method for the molded catalyst according to the present disclosure, the detachment rates of the molded catalysts of Comparative Examples 1 to 3 manufactured by the slurry coating method and those manufactured by the method of the present disclosure, namely Examples 15, 2, and 3 using the same molded bodies as in Comparative Examples 1 to 3, were measured in the same manner as in Experimental Example 1. The results are shown in Table 2 below.

[Table 2]

| Classification | Molded body type | Surface treatment agent for molded body | Catalytic component coating layer | Coating method | Detachment rate (%) |
|---|---|---|---|---|---|
| Comparative Example 1 | $Al_2O_3$ beads | KOH | La-Ce | Slurry coating | 5.7 |
| Example 15 | $Al_2O_3$ beads | KOH | La-Ce | Immersion in fixation solution | No detachment |
| Comparative Example 2 | $ZrO_2$ pellets | KOH | La-Ce | Slurry coating | 9.4 |
| Example 2 | $ZrO_2$ pellets | KOH | La-Ce | Immersion in fixation solution | No detachment |
| Comparative Example 3 | $SiO_2$ gel beads | KOH | La-Ce | Slurry coating | 15.3 |

(continued)

| Classification | Molded body type | Surface treatment agent for molded body | Catalytic component coating layer | Coating method | Detachment rate (%) |
|---|---|---|---|---|---|
| Example 3 | SiO$_2$ gel beads | KOH | La-Ce | Immersion in fixation solution | 12.7 |

As shown in Table 2, for Al$_2$O$_3$ beads and ZrO$_2$ pellets, the molded catalysts manufactured according to the method of the present disclosure exhibited no detectable detachment, whereas, for SiO$_2$ gel beads, the detachment rate was significantly reduced compared to when using the conventional slurry coating method. The results reveal that when the molded catalyst is manufactured by the method of the present disclosure, the fixation of the coating layer is significantly improved regardless of the type of molded body, thereby effectively reducing the detachment rate of the coating layer as compared to the conventional slurry coating method.

<Effect of Fixation solution Type and Fixation Treatment>

In order to evaluate the effect of the type of fixation solution, the detachment rates of the molded catalysts manufactured in the Examples using the same manufacturing method except for varying the type of fixation solution are summarized in Table 3 below. Additionally, Table 4 shows the results of applying the molded catalysts manufactured in Example 1, Example 6, and Comparative Example 4 to the ammonia decomposition reaction as described in Experimental Example 2.

[Table 3]

| Classification | Molded body type | Catalytic component coating layer | Fixation solution | Detachment rate (%) |
|---|---|---|---|---|
| Example 1 | Al$_2$O$_3$ beads | La-Ce | KOH | No detachment |
| Example 4 | Al$_2$O$_3$ beads | La-Ce | LiOH | No detachment |
| Example 5 | Al$_2$O$_3$ beads | La-Ce | NaOH | No detachment |
| Example 6 | Al$_2$O$_3$ beads | La-Ce | NH$_4$OH | No detachment |

[Table 4]

| Classification | Fixation solution | Ammonia conversion rate (%) | | | | |
|---|---|---|---|---|---|---|
| | | 350°C | 400°C | 450°C | 500°C | 550°C |
| Example 1 | KOH | 20.3 | 45.0 | 75.6 | 95.8 | 100 |
| Example 6 | NH$_4$OH | 13.7 | 31.4 | 59.3 | 88.6 | 100 |
| Comparative Example 4 | Water | 12.2 | 28.6 | 51.7 | 82.7 | 99.1 |

When LiOH, KOH, NaOH, and NH$_4$OH were used as the fixation solution according to the present disclosure, no detachment of the coating layer was observed in all cases. Furthermore, referring to Table 4, in Comparative Example 4 in which water was used instead of the fixation solution according to the present disclosure, the catalytic activity in the ammonia decomposition reaction was relatively low. Whereas, Example 1 using an alkali metal hydroxide as the fixation solution exhibited the highest catalytic activity.

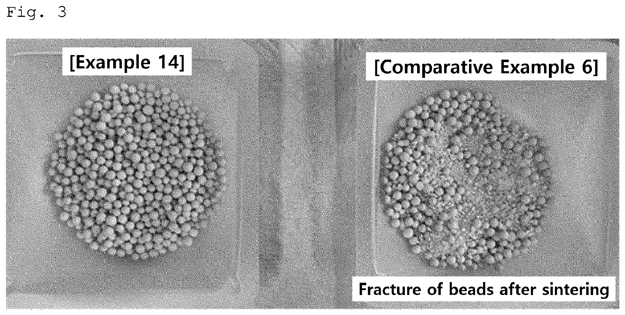

Comparative Examples 5 and 6 differ from Examples 13 and 14 only in that the fixation step was not performed. As shown in FIGS. 2 and 3, the beads in Comparative Examples 5 and 6 were found to be fractured after sintering. From these results, it can be found that the fixation step using the fixation solution is essential in the manufacture of the molded catalyst.

<Effect of Catalytic Component Type>

In order to evaluate the detachment of the coating layer when different catalytic components were employed, the detachment rates of the molded catalysts manufactured in the Examples using the same manufacturing method, except for varying the type of catalytic component, were measured. The results are shown in Table 5.

[Table 5]

| Classification | Molded body type | Catalytic component coating layer | Coating method | Detachment rate (%) |
|---|---|---|---|---|
| Example 1 | $Al_2O_3$ beads | La-Ce | Immersion in fixation solution | No detachment |
| Example 10 | $Al_2O_3$ beads | Mg | Immersion in fixation solution | No detachment |
| Example 11 | $Al_2O_3$ beads | Y | Immersion in fixation solution | No detachment |
| Example 12 | $Al_2O_3$ beads | Pr | Immersion in fixation solution | No detachment |
| Example 14 | $Al_2O_3$ beads | Ce | Immersion in fixation solution | No detachment |

Referring to Table 5, regardless of the type of catalytic component, whether a composite component of La-Ce or single components such as Mg, Y, Pr, and Ce, detachment of the coating layer was effectively suppressed in all cases when the fixation step of the manufacturing method according to the present disclosure was applied.

**<Effect of First Additive>**

In order to evaluate the effect of the first additive according to the present disclosure, the detachment rates of the molded catalysts of Example 1 and Example 16, which differ only in whether the first additive was included in the coating solution, were measured. The results are shown in Table 6.

[Table 6]

| Classification | Molded body type | Catalytic component coating layer | First additive | Detachment rate (%) | Catalytic component leaching in fixation solution |
|---|---|---|---|---|---|
| Example 1 | $Al_2O_3$ beads | La-Ce | Methyl cellulose | No detachment | X |
| Example 16 | $Al_2O_3$ beads | La-Ce | - | No detachment | O |

As shown in Table 6, even in Example 16 in which the first additive was not used, no detachment of the coating layer was observed. Accordingly, it can be found that the detachment of the coating layer is primarily determined by the fixation step in the present disclosure. However, in the case of not using the first additive, precipitation of the catalytic component (La-Ce) was visually observed in the fixation solution. This is considered to be due to the fact that the La-Ce component in the wet layer was leached into the fixation solution during the fixation step and subsequently reacted with KOH or other alkaline species in the fixation solution to form a precipitate.

In order to verify such leaching into the fixation solution, the contents of Al, La, and Ce in the molded catalysts manufactured in Example 1 and Example 16 were measured by X-ray fluorescence (XRF), and the results are shown in Table 7.

[Table 7]

| Classification | Al (mol.%) | La (mol.%) | Ce (mol.%) | Total |
|---|---|---|---|---|
| Example 1 | 99.22 | 0.25 | 0.53 | 100 |
| Example 16 | 99.51 | 0.16 | 0.33 | 100 |

The contents of La and Ce in Example 1, in which the first additive was included in the coating solution, were higher than those in Example 16 which employed no first additive. This indicates that the first additive effectively prevents the catalytic components from being leached into the fixation solution during the fixation step.

Furthermore, in Examples 7 to 9, in which different types of first additives, namely polyvinyl alcohol, polyethylene glycol, and silica sol, were used, no precipitation due to leaching of the catalytic components into the fixation solution was observed, similar to Example 1.

**<Effect of Second Additive>**

In order to evaluate the effect of the second additive according to the present disclosure, Examples 17 and 18 were compared. In the case of Example 17, in which no second additive was used, partial shrinkage or delamination of the coating layer were observed during the drying process of the fixed alumina beads after completion of the fixation step, as compared to Example 1 and Example 18, in which glycerol or ethylene glycol was used as the second additive. From these results, it can be found that the second additive effectively suppresses shrinkage and peeling of the coating layer during the drying process after fixation, thereby improving the uniformity of the final calcined coating layer.

**<Effect of Surface Treatment>**

The compressive strength of the molded catalysts manufactured in Example 1 and Example 15, which differ only in whether surface treatment was performed, was measured, and the results of the ammonia conversion reaction carried out in the same manner as in Experimental Example 2 using the catalysts are shown in Table 8.

[Table 8]

| Classification | Compressive Strength (N/cm$^2$) | Ammonia conversion rate (%) | | | | |
|---|---|---|---|---|---|---|
| | | 350°C | 400°C | 450°C | 500°C | 550°C |
| Example 1 | 995.2 | 17.3 | 39.3 | 70.8 | 96.5 | 99.8 |
| Example 15 | 987.6 | 25.1 | 50.9 | 82.0 | 98.1 | 100 |

The molded catalyst of Example 15, which was pre-treated in 1 M KOH, exhibited a compressive strength of 99.3% relative to Example 1, indicating no significant difference. However, the ammonia conversion rate at a low temperature of 350°C was significantly higher, reaching approximately 1.45 times that of Example 1. From these results, it can be found that pre-treating the molded body surface with an acid or base during the manufacture of the molded catalyst does not significantly improve mechanical strength, but may be advantageous in terms of enhancing catalytic efficiency.

**<Catalytic Activity of Molded Catalyst Manufactured According to the Present disclosure>**

In order to compare the catalytic activity of the catalysts manufactured according to the manufacturing method of the present disclosure under actual reaction conditions, the ammonia decomposition reaction described in Experimental Example 2 was carried out using the molded catalyst of Example 1 and the molded catalyst of Comparative Example 7, in which the coating layer was formed by an impregnation method. The results are shown in Table 9.

[Table 9]

| Classification | Ammonia conversion rate (%) | | | | |
|---|---|---|---|---|---|
| | 350°C | 400°C | 450°C | 500°C | 550°C |
| Example 1 | 17.3 | 39.3 | 70.8 | 96.5 | 99.8 |
| Comparative Example 7 | 13.2 | 31.1 | 57.7 | 85.0 | 98.9 |

The molded catalyst manufactured in Example 1 exhibited a higher ammonia conversion rate over the entire testing temperature range compared to that of Comparative Example 7. In the case of Example 1, the amount of cerium and lanthanum precursors included in the coating solution was only about 27% of that used in Comparative Example 7. Additionally, since the coating layer was formed by a dip coating method, the consumption of the coating solution was significantly reduced (less than 10% per one coating cycle), resulting in a substantially lower usage of cerium and lanthanum compared to Comparative Example 7. Accordingly, it would be expected that the La-Ce coating layer of Comparative Example 7 would have a relatively higher specific surface area, and thus, under the condition of the same loading amount of Ru, Comparative Example 7 would exhibit a higher ammonia conversion rate due to better dispersion of Ru. However, contrary to this expectation, the experimental results demonstrated that Example 1 exhibited a higher ammonia conversion rate.
From these results, it can be found that the manufacturing method according to the present disclosure is capable of producing a highly efficient catalyst by reducing the usage of relatively expensive coating materials such as La-Ce, while achieving a synergistic interaction between the La-Ce composite oxide layer and the alumina support, thereby enhancing catalytic performance.

Although the present disclosure has been described with reference to the above-described embodiment, various modifications and variations may be made within the spirit and scope of the present disclosure. Accordingly, the scope of the present disclosure is defined by the appended claims and equivalents thereof, and is not limited to the specific embodiments described herein.

**Claims**

1. A manufacturing method for a molded catalyst, the manufacturing method comprising:

   (a) immersing a molded body in a coating solution including a catalytic component to form a wet layer containing the catalytic component on a surface of the molded body;
   (b) immersing the molded body on which the wet layer has been formed in a fixation solution in which at least one compound selected from the group consisting of LiOH, NaOH, KOH, $NH_4OH$, and $(NH_2)_2CO$ is dissolved, thereby fixing the wet layer onto the surface of the molded body; and
   (c) subjecting the molded body on which the wet layer has been fixed to heat treatment, thereby forming a coating layer of the catalytic component on the surface of the molded body.

2. The manufacturing method of claim 1, wherein the molded body in step (a) is surface-treated with an acid and/or a base.

3. The manufacturing method of claim 2, wherein the acid is at least one selected from the group consisting of HCl, $HNO_3$, $H_2SO_4$, HF, $H_3PO_4$, and organic acid, and the base is at least one selected from the group consisting of LiOH, NaOH, KOH, $NH_4OH$, and $NaBH_4$.

4. The manufacturing method of claim 1, wherein the coating solution in step (a) further includes: at least one first additive selected from the group consisting of methyl cellulose, hydroxyethyl cellulose, sodium carboxymethyl cellulose, purified starch, dextrin, polyvinyl alcohol, polyvinyl butyral, polymethyl methacrylate, and polyethylene glycol; and/or at least one second additive selected from polyhydric alcohols.

5. The manufacturing method of claim 4, wherein the first additive is contained in an amount of 0.05 to 10 parts by weight based on 100 parts by weight of a catalyst support component, and the second additive is contained in an amount of 0.5 to 90 parts by volume based on 100 parts by volume of the catalyst support component.

6. The manufacturing method of claim 4, wherein in the coating solution in step (a), the first additive is contained in an amount of 0.05 to 10 parts by weight based on 100 parts by weight of a catalyst support component, and the second additive is contained in an amount of 0.5 to 90 parts by volume based on 100 parts by volume of the catalyst support component.

7. The manufacturing method of claim 1, further comprising:
   performing an air-blowing process for removing excess coating solution after the immersion of the coating solution in step (a).

8. The manufacturing method of claim 1, wherein the fixation solution in step (b) is maintained at a temperature of 20°C to 50°C.

9. The manufacturing method of claim 1, wherein the heat treatment in step (c) includes a drying step at a temperature of 40°C to 120°C and a calcination step at a temperature of 350°C to 700°C.

10. The manufacturing method of claim 1, further comprising:

    (d) supporting a catalytically active material on the coating layer of the molded body; and
    (e) subjecting the molded body on which the catalytically active material has been supported to drying and/or calcination, thereby preparing a catalytically active material-supported molded body.

11. A molded catalyst having a coating layer of a catalytic component formed on a surface of a molded body, the molded catalyst being manufactured by a manufacturing method comprising:

(a) immersing a molded body in a coating solution including a catalytic component to form a wet layer containing the catalytic component on a surface of the molded body;
(b) immersing the molded body on which the wet layer has been formed in a fixation solution in which at least one compound selected from the group consisting of $LiOH$, $NaOH$, $KOH$, $NH_4OH$, and $(NH_2)_2CO$ is dissolved, thereby fixing the wet layer onto the surface of the molded body; and
(c) subjecting the molded body on which the wet layer has been formed to heat treatment, thereby forming a coating layer of the catalytic component on the surface of the molded body.

12. The molded catalyst of claim 11, wherein the molded catalyst is manufactured by the manufacturing method further comprising:

(d) supporting a catalytically active material on the coating layer of the molded body; and
(e) subjecting the molded body on which the catalytically active material has been supported to drying and/or calcination, thereby preparing a catalytically active material-supported molded body.

Fig. 1

Fig. 2

Fig. 3

[Example 14]

[Comparative Example 6]

Fracture of beads after sintering

## INTERNATIONAL SEARCH REPORT

| International application No. |
|---|
| **PCT/KR2024/019382** |

**A.    CLASSIFICATION OF SUBJECT MATTER**

**B01J 37/02**(2006.01)i; **B01J 37/08**(2006.01)i; **B01J 37/00**(2006.01)i

According to International Patent Classification (IPC) or to both national classification and IPC

**B.    FIELDS SEARCHED**

Minimum documentation searched (classification system followed by classification symbols)

B01J 37/02(2006.01); B01J 23/66(2006.01); B01J 23/75(2006.01); B01J 29/65(2006.01); B01J 32/00(2006.01); B01J 35/10(2006.01); B01J 37/00(2006.01); B01J 37/04(2006.01); C10G 2/00(2006.01); H01M 8/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 촉매(catalyst), 코팅(coating), 고정(fixing), 산(acid), 염기(base), 소성(firing), 침지 (dipping)

**C.    DOCUMENTS CONSIDERED TO BE RELEVANT**

| Category* | Citation of document, with indication, where appropriate, of the relevant passages | Relevant to claim No. |
|---|---|---|
| X | WO 2005-065821 A1 (CELANESE INTERNATIONAL CORPORATION et al.) 21 July 2005 (2005-07-21)<br>See paragraphs [0047]-[0112]; and examples 1-5. | 1-4,7-12 |
| Y | | 5,6 |
| Y | WO 2023-129688 A1 (NEXCERIS INNOVATION HOLDINGS, LLC) 06 July 2023 (2023-07-06)<br>See claims 26-28. | 5,6 |
| A | KR 10-2018-0028042 A (ELCHEM TECH CO., LTD.) 15 March 2018 (2018-03-15)<br>See abstract; and claim 1. | 1-12 |
| A | KR 10-2008-0113676 A (LG CHEM, LTD.) 31 December 2008 (2008-12-31)<br>See claims 5 and 8. | 1-12 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 March 2025** | **14 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/019382** |

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| A | KR 10-2023-0006722 A (RESEARCH & BUSINESS FOUNDATION SUNGKYUNKWAN UNIVERSITY) 11 January 2023 (2023-01-11)<br>See claims 1-20. | | 1-12 |

Form PCT/ISA/210 (second sheet) (July 2022)

## INTERNATIONAL SEARCH REPORT
### Information on patent family members

International application No.

**PCT/KR2024/019382**

| Patent document cited in search report | | | Publication date (day/month/year) | Patent family member(s) | | | Publication date (day/month/year) |
|---|---|---|---|---|---|---|---|
| WO | 2005-065821 | A1 | 21 July 2005 | CN | 100569364 | C | 16 December 2009 |
| | | | | CN | 100929916 | A | 14 March 2007 |
| | | | | EP | 1694437 | A1 | 30 August 2006 |
| | | | | JP | 2007-514540 | A | 07 June 2007 |
| | | | | JP | 4772694 | B2 | 14 September 2011 |
| | | | | KR | 10-0890655 | B1 | 26 March 2009 |
| | | | | KR | 10-2006-0100454 | A | 20 September 2006 |
| WO | 2023-129688 | A1 | 06 July 2023 | CN | 118843675 | A | 25 October 2024 |
| | | | | EP | 4457302 | A1 | 06 November 2024 |
| | | | | JP | 2025-501279 | A | 17 January 2025 |
| | | | | KR | 10-2024-0129016 | A | 27 August 2024 |
| KR | 10-2018-0028042 | A | 15 March 2018 | None | | | |
| KR | 10-2008-0113676 | A | 31 December 2008 | KR | 10-1242327 | B1 | 12 March 2013 |
| KR | 10-2023-0006722 | A | 11 January 2023 | KR | 10-2607444 | B1 | 30 November 2023 |
| | | | | US | 2023-0001394 | A1 | 05 January 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100807730
- KR 101403698
- KR 20230103587
- KR 20071001
- KR 20130207
- KR 20230707